# EUROPEAN PATENT SPECIFICATION

(11) **EP 3 833 566 B1**
(45) Date of publication and mention of the grant of the patent: **08.07.2026**
(21) Application number: 19804022.2
(22) Date of filing: 25.04.2019
(51) Int. Cl.: B60L 53/14, B60L 53/16, H02J 7/02, B60L 53/10, H01R 13/447, H01R 13/52, H01R 27/00

(54) **COVER ARRANGEMENT FOR A COMBINED CHARGING RECEIVER**
ABDECKVORRICHTUNG FÜR EINEN KOMBINIERTEN LADEEMPFÄNGER
ARRANGEMENT DE COUVERCLE POUR UN RÉCEPTEUR DE CHARGE COMBINÉ

(30) Priority: 18.05.2018 SE 1850582
(43) Date of publication of application: 16.06.2021
(73) Proprietor: Scania CV AB, 151 87 Södertälje (SE)
(72) Inventor: HILLERBRANT, Mattias, 144 52 Rönninge (SE)
(74) Representative: Scania CV AB
(86) International application number: PCT/SE2019/050374
(87) International publication number: WO 2019/221653

(56) References cited:
- EP-A1- 3 096 411
- DE-A1- 102013 108 484
- DE-A1- 102015 224 891
- JP-A- 2016 219 242
- US-A- 5 545 046
- US-A- 5 545 046
- US-A- 5 686 701
- US-A1- 2017 197 515

## Description

### TECHNICAL FIELD

The invention relates to a cover arrangement for a combined charging receiver arranged on a vehicle for charging a battery unit of the vehicle. The invention also relates to a vehicle.

### BACKGROUND ART

Electric vehicles and hybrid vehicles are provided with battery units which need to be charged. In order to facilitate charging batteries on such vehicles a so called combined charging system (CCS) may be used. Such a combined charging system may comprises a combined charging receiver arranged at the vehicle. The combined charging receiver comprises a first receiving portion for receiving an alternating current (AC) charging connector and a second receiving portion for receiving a direct current (DC) charging connector. The first receiving portion further comprises ground connection and signal connections. The alternating current charging connector as well as the direct current charging connector are connectable to the ground connection and signal connections of the first receiving portion. When not used, the combined charging receiver needs to be covered for protection.

US 5 545 046 discloses a charging connector for an electrical vehicle wherein the connector comprises a first connector which is an AC receiving portion and a second connector which is a DC receiving portion. The first connector is covered by a first cap and the second connector is covered by a second cap. Both caps are locked by the use of two retaining levers.

US 2017/197515 discloses a charging connector for an electrical vehicle wherein two power receiving portions is combined into a single structure. A two-part closure is provided on the exterior of the vehicle and comprises an inner part and an outer part. A first fastener comprises a button mounted within the inner part. A dimple forms part of a second fastener and is part of the outer part. The inner part is locked by the use of the first fastener and the outer part is locked by the use of the second fastener.

### OBJECTS OF THE INVENTION

An object of the present invention is to provide a cover arrangement for a combined charging receiver arranged on a vehicle for charging a battery unit of the vehicle, which cover arrangement facilitates for an operator to access the combined charging receiver in connection to charging.

Another object of the present invention is to provide a vehicle comprising such a cover arrangement.

### SUMMARY OF THE INVENTION

These and other objects, apparent from the following description, are achieved by a cover arrangement and a vehicle as set out in the claims.

Specifically an object of the invention is achieved by a cover arrangement for a combined charging receiver arranged on a vehicle for charging a battery unit of the vehicle. The combined charging receiver comprises a first receiving portion for receiving an alternating current charging connector and a second receiving portion for receiving a direct current charging connector. The first receiving portion further comprises ground connection and signal connections. The alternating current charging connector as well as the direct current charging connector are connectable to the ground connection and signal connections of the first receiving portion. The cover arrangement comprises a first cover element being arranged to cover the first receiving portion and a second cover element being arranged to cover the second receiving portion. The first cover element is configured to be separately openable to expose the first receiving portion, and the second cover element is openable to expose the second receiving portion. The first cover element is configured to partly overlap the second cover element so that both cover elements are openable by means of the second cover element exposing the first receiving portion as well as the second receiving portion.

Hereby an operator may easily access the combined charging receiver in connection to charging in that the operator may easily open the first cover element for connecting an alternating current charging connector or both the first and second cover element for connecting a direct current charging connector. Due to the fact that the first cover element is configured to partly overlap the second cover element a cover arrangement is provided with facilitates easy and cost efficient manufacture.

The first cover element and the second cover element are arranged to be hingedly connected to the combined charging receiver at a distance from each other. Herby an even easier and more cost efficient manufacture is facilitated. Due to the hinged connection at a distance from each other easy replacement of one cover element is facilitated.

The second cover element is retained when an alternating current charging connector is introduced in the first receiving portion. Hereby the risk of exposure of the second receiving portion when an alternating current charging connector is introduced in the first receiving portion is efficiently essentially eliminated.

According to an embodiment of the cover arrangement the first cover element comprises a first grip member arranged to facilitate manual opening of the first cover element and the second cover element comprises a second grip member arranged to facilitate manual opening of the second cover element. Specifically an object of the invention is achieved by a vehicle comprising a cover arrangement as set out herein.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Fig. 1 schematically illustrates a side view of a vehicle according to an embodiment of the present disclosure;
Fig. 2 schematically illustrates a plan view of a cover arrangement arranged to cover a combined charging receiver according to an embodiment of the present disclosure;
Fig. 3 schematically illustrates a plan view of the cover arrangement in fig. 2 arranged to partly cover the combined charging receiver according to an embodiment of the present disclosure; and
Fig. 4 schematically illustrates a plan view of the cover arrangement in fig. 2 arranged to expose the combined charging receiver according to an embodiment of the present disclosure.

### DETAILED DESCRIPTION

Hereinafter the term "link" refers to a communication link which may be a physical connector, such as an optoelectronic communication wire, or a non-physical connector such as a wireless connection, for example a radio or microwave link.

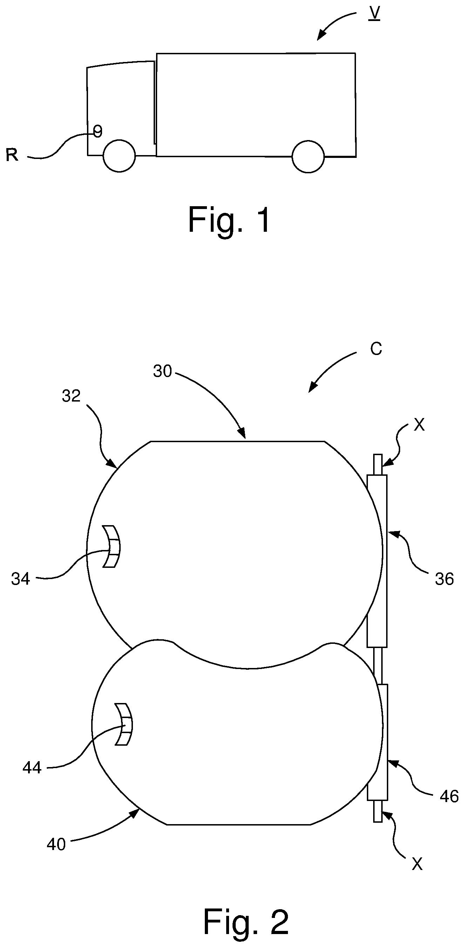

Fig. 1 schematically illustrates a side view of a vehicle V according to an embodiment of the present disclosure. The vehicle V may be an electric vehicle. The vehicle V may be a hybrid vehicle. The vehicle comprises a chargeable battery unit, not shown. The vehicle V comprises a combined charging receiver arranged on the vehicle V for charging the battery unit of the vehicle. The combined charging receiver R is, during non-operation, i.e. non-charging, arranged to be covered by means of a cover arrangement according to the present disclosure.

Fig. 2, 3 and 4 schematically illustrates a plan view of a cover arrangement C for covering a combined charging receiver R according to an embodiment of the present disclosure.

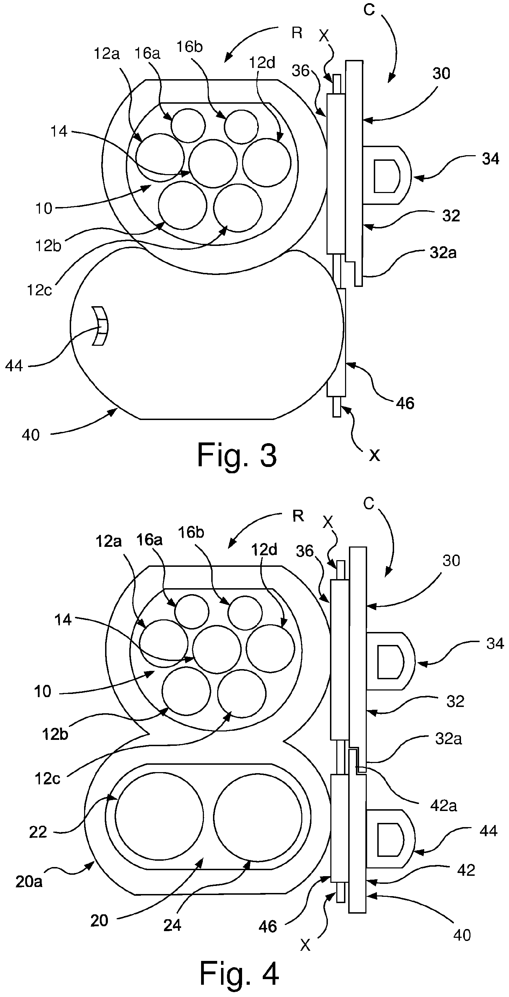

In fig. 4, the cover arrangement C is arranged to expose the combined charging receiver R.

As shown in fig. 3 and 4 the combined charging receiver R comprises a first receiving portion 10 for receiving an alternating current charging connector, not shown. The first receiving portion 10 comprises alternating current charging inlets 12a, 12b, 12c, 12d for receiving such an alternating current charging connector for charging with alternating current.

The first receiving portion 10 comprises ground connection 14.

The first receiving portion 10 comprises signal connections 16a, 16b.

The first receiving portion 10 has according to this embodiment an essentially oval shape. The first receiving portion 10 comprises an outer edge 10a having an essentially oval configuration.

The ground connection 14 is according to this exemplary embodiment centrally arranged on the first receiving portion 10. The alternating current charging inlets 12a, 12b, 12c, 12d and the signal connections 16a, 16b are arranged around the ground connection. The alternating current charging inlets 12a, 12b, 12c, 12d are to some extent facing towards the second receiving portion 20 and the signal connections 16a, 16b are facing away from the second receiving portion 20.

As shown in fig. 4 the combined charging receiver R comprises a second receiving portion 20 for receiving a direct current charging connector, not shown. The second receiving portion 20 comprises direct current charging inlets 22, 24 for receiving such direct current charging connector for charging with direct current.

The second receiving portion 20 has according to this embodiment an essentially oval shape. The first receiving portion 20 comprises an outer edge 20a having an essentially oval configuration.

Thus, the charging receiver R according to this exemplary embodiment has a composite oval shape. The essentially oval shaped first receiving portion 10 and the essentially oval shaped second receiving portion 20 are lumped together forming the charging receiver R.

The not shown alternating current charging connector as well as the not shown direct current charging connector are connectable to the ground connection 14 and signal connections 16a, 16b of the first receiving portion 10.

Fig. 2 schematically illustrates a plan view of the cover arrangement C arranged to cover the combined charging receiver R according to an embodiment of the present disclosure.

The cover arrangement C comprises a first cover element 30 being arranged to cover the first receiving portion 10. The first cover element 30 comprises according to this embodiment a first lid member 32 for covering the first receiving portion 10. The first lid member 32 has a shape essentially corresponding to the shape of the first receiving portion 10 so as to cover the first receiving portion 10. The first lid member 32 has a flat configuration in the shape of a first lid.

The first cover element 30 comprises according to this embodiment a first grip member 34 for facilitating opening of the first lid member 32. The first grip member 34 is arranged to facilitate manual opening and closing of the first cover element 30. The first grip member 34 may have any suitable shape. The first grip member 34 has according to this exemplary embodiment the shape of a handle. The first grip member may according to an alternative variant be a projecting portion of the first lid member, such a projecting portion e.g. being configured to project so that the first lid member may be easily first gripped for facilitating opening of the first lid member.

The first cover element 30 is configured to be separately openable to expose the first receiving portion 10.

Fig. 3 schematically illustrates a plan view of the cover arrangement C in fig. 2 arranged to partly cover the combined charging receiver R according to an embodiment of the present disclosure. In fig. 3 first cover element 30 has been opened to expose the first receiving portion 10.

As shown in fig. 2, 3 and 4 the first cover element 30 comprises a first hinge member 36. The first hinge member 36 is hingedly connected to a shaft X configured to be arranged in connection to the charging receiver R. The first hinge member 36 is connected to the lid member 32 so as to facilitate a pivotal opening and closing movement about the shaft X. Thus, the first cover element 30 is arranged to be hingedly connected to the combined charging receiver R. The first cover element 30 is arranged to be hingedly connected to the combined charging receiver R by means of the first hinge member 36.

The cover arrangement C comprises a second cover element 40 being arranged to cover the second receiving portion 20. The second cover element 40 comprises according to this embodiment a second lid member 42 for covering the second receiving portion 20. The second lid member 42 has a shape essentially corresponding to the shape of the second receiving portion 20 so as to cover the second receiving portion 20. The second lid member 42 has a flat configuration in the shape of a second lid.

The second cover element 40 comprises according to this embodiment a second grip member 44 for facilitating opening of the second lid member 42. The second grip member 44 is arranged to facilitate manual opening and closing of the second cover element 40. The second grip member 44 may have any suitable shape. The second grip member 44 has according to this exemplary embodiment the shape of a handle. The second grip member may according to an alternative variant be a projecting portion of the second lid member, such a projecting portion e.g. being configured to project so that the second lid member may be easily second gripped for facilitating opening of the second lid member.

As shown in fig. 2, 3 and 4 the second cover element 40 comprises a second hinge member 46. The second hinge member 46 is hingedly connected to a shaft X configured to be arranged in connection to the charging receiver R. The second hinge member 46 is connected to the lid member 42 so as to facilitate a pivotal opening and closing movement about the shaft X. Thus, the second cover element 40 is arranged to be hingedly connected to the combined charging receiver R. The second cover element 40 is arranged to be hingedly connected to the combined charging receiver R by means of the second hinge member 46.

According to the embodiment of the cover arrangement C illustrated with reference to fig. 2-4 the first cover element 30 and the second cover element 40 are arranged to be hingedly connected to the combined charging receiver R at a distance from each other. The first hinge member 36 and the second hinge member 46 are according to this embodiment arranged at a distance from each other. The first hinge member 36 and the second hinge member 46 are according to this embodiment coaxially arranged relative to each other. The first hinge member 36 and the second hinge member 46 are according to this embodiment connected to a common shaft X. The first hinge member 36 and the second hinge member 46 could alternatively be connected to two separate shafts. The first hinge member 36 and the second hinge member 46 could alternatively be pivotable about axis not being coaxially arranged relative to each other.

The second cover element 40 is openable to expose the second receiving portion 20.

As shown in e.g. fig. 2, the first cover element 30 is configured to partly overlap the second cover element 40. The first led member 32 of the first cover element 30 is configured to partly overlap the second lid member 42 of the second cover element 40. The first led member 32 comprises according to this embodiment an overlapping portion 32a.

The first cover element 30 is configured to partly overlap the second cover element 40 so that both cover elements 30, 40 are openable by means of the second cover element 40 exposing the first receiving portion 10 as well as the second receiving portion 20, as shown in fig. 4. Thus, the first lid member 32 is openably by the second lid member 42 so that the first receiving portion 10 and the second receiving portion 20 are both exposed.

The overlapping portion 32a of the first lid member 32 is according to this embodiment comprised of a protruding portion of the first lid member 32 as shown in fig. 4.

The second lid member 42 of the second cover element 40 has a protruding portion 42a configured to be overlapped by the overlapping portion 32a of the first lid member 32. The protruding portion 42a is thus configured to project under the overlapping portion 32a of the first lid member 32.

Fig. 4 schematically illustrates a plan view of the cover arrangement C in fig. 2 arranged to expose the combined charging receiver R according to an embodiment of the present disclosure.

According to an embodiment the cover arrangement C is arranged such that the second cover element 40 is retained when an alternating current charging connector is introduced in the first receiving portion 10. According to an embodiment the second cover element 40, e.g. the second lid member 42 of the second cover element 40, is configured such that, when an alternating current charging connector is introduced in the first receiving portion 10, the alternating current charging connector retains the second cover element 40. According to an embodiment the second lid member 42 of the second cover element 40 has a shape such that when an alternating current charging connector is introduced in the first receiving portion 10 for connection, a portion of the alternating charging connector overlaps a portion of the second lid member 42.

According to an embodiment the cover arrangement C may comprise any suitable locking arrangement for retaining the first cover element 30 when being in a closed position for covering the first receiving portion. Such a locking arrangement may comprise a snap fit arrangement of the first lid member 32.

According to an embodiment the cover arrangement C may comprise any suitable locking arrangement for retaining the second cover element 40 when being in a closed position for covering the second receiving portion 20. Such a locking arrangement may comprise a snap fit arrangement of the second lid member 42.

## Claims

1. A cover arrangement (C) for a combined charging receiver (R) arranged on a vehicle (V) for charging a battery unit of the vehicle, the combined charging receiver (R) comprising a first receiving portion (10) for receiving an alternating current charging connector and a second receiving portion (20) for receiving a direct current charging connector, the first receiving portion (10) further comprising ground connection (14) and signal connections (16a, 16b), the alternating current charging connector as well as the direct current charging connector being connectable to the ground connection (14) and signal connections (16a, 16b) of the first receiving portion (10), the cover arrangement (C) comprising a first cover element (30) being arranged to cover the first receiving portion (10) and a second cover element (40) being arranged to cover the second receiving portion (20), wherein the second cover element (40) comprises a second lid member (42) for covering the second receiving portion (20), wherein the first cover element (30) is configured to be separately openable to expose the first receiving portion (10), and the second cover element (40) being openable to expose the second receiving portion (20), the first cover element (30) being configured to partly overlap the second cover element (40) so that both cover elements (30, 40) are openable by means of the second cover element (40) exposing the first receiving portion (10) as well as the second receiving portion (20), wherein the first cover element (30) and the second cover element (40) are arranged to be hingedly connectable to the combined charging receiver (R) at a distance from each other **characterized in that** the cover arrangement (C) being arranged such that the second cover element (40) is retained when an alternating current charging connector is introduced in the first receiving portion (10), wherein the second lid member (42) of the second cover element (40) has a shape such that when an alternating current charging connector is introduced in the first receiving portion (10) for connection, a portion of the alternating charging connector overlaps a portion of the second lid member (42).

2. The cover arrangement according to claim 1, wherein the first cover element (30) comprises a first grip member (34) arranged to facilitate manual opening of the first cover element (30) and the second cover element (40) comprises a second grip member (44) arranged to facilitate manual opening of the second cover element (40).

3. A vehicle (1) comprising a cover arrangement according to any of claims 1-2.

## Patentansprüche

1. Abdeckanordnung (C) für einen kombinierten Ladeempfänger (R), der an einem Fahrzeug (V) zum Laden einer Batterieeinheit des Fahrzeugs angeordnet ist, wobei der kombinierte Ladeempfänger (R) einen ersten Aufnahmeabschnitt (10) zur Aufnahme eines Wechselstrom-Ladeverbinders und einen zweiten Aufnahmeabschnitt (20) zur Aufnahme eines Gleichstrom-Ladeverbinders umfasst, wobei der erste Aufnahmeabschnitt (10) ferner einen Masseanschluss (14) und Signalanschlüsse (16a, 16b) umfasst, wobei sowohl der Wechselstrom-Ladeverbinder als auch der Gleichstrom-Ladeverbinder mit dem Masseanschluss (14) und den Signalanschlüssen (16a, 16b) des ersten Aufnahmeabschnitts (10) verbindbar sind, wobei die Abdeckanordnung (C) ein erstes Abdeckelement (30), das derart angeordnet ist, dass es den ersten Aufnahmeabschnitt (10) abdeckt, und ein zweites Abdeckelement (40), das derart angeordnet ist, dass es den zweiten Aufnahmeabschnitt (20) abdeckt, umfasst, wobei das zweite Abdeckelement (40) ein zweites Deckelelement (42) zur Abdeckung des zweiten Aufnahmeabschnitts (20) umfasst, wobei das erste Abdeckelement (30) derart ausgebildet ist, dass es separat geöffnet werden kann, um den ersten Aufnahmeabschnitt (10) freizulegen, und das zweite Abdeckelement (40) geöffnet werden kann, um den zweiten Aufnahmeabschnitt (20) freizulegen, wobei das erste Abdeckelement (30) derart ausgebildet ist, dass es das zweite Abdeckelement (40) teilweise überlappt, sodass beide Abdeckelemente (30, 40) mittels des zweiten Abdeckelements (40) geöffnet werden können, wodurch sowohl der erste Aufnahmeabschnitt (10) als auch der zweite Aufnahmeabschnitt (20) freigelegt werden, wobei das erste Abdeckelement (30) und das zweite Abdeckelement (40) derart angeordnet sind, dass sie in einem Abstand zueinander gelenkig mit dem kombinierten Ladeempfänger (R) verbindbar sind, **dadurch gekennzeichnet, dass** die Abdeckanordnung (C) derart angeordnet ist, dass das zweite Abdeckelement (40) gehalten wird, wenn ein Wechselstrom-Ladeverbinder in den ersten Aufnahmeabschnitt (10) eingeführt wird, wobei das zweite Deckelelement (42) des zweiten Abdeckelements (40) derart geformt ist, dass ein Abschnitt des Wechselstrom-Ladeverbinders einen Abschnitt des zweiten Deckelelements (42) überlappt, wenn ein Wechselstrom-Ladeverbinder zum Anschließen in den ersten Aufnahmeabschnitt (10) eingeführt wird.

2. Abdeckanordnung nach Anspruch 1, wobei das erste Abdeckelement (30) ein erstes Griffelement (34) umfasst, das dazu angeordnet ist, ein manuelles Öffnen des ersten Abdeckelements (30) zu erleichtern, und das zweite Abdeckelement (40) ein zweites Griffelement (44) umfasst, das dazu angeordnet ist, ein manuelles Öffnen des zweiten Abdeckelements (40) zu erleichtern.

3. Fahrzeug (1) mit einer Abdeckanordnung nach einem der Ansprüche 1-2.

## Revendications

1. Agencement de capot (C) pour un récepteur de charge combiné (R) agencé sur un véhicule (V) pour charger une unité de batterie du véhicule, le récepteur de charge combiné (R) comprenant une première portion de réception (10) destinée à recevoir un connecteur de charge à courant alternatif et une deuxième portion de réception (20) destinée à recevoir un connecteur de charge à courant continu, la première portion de réception (10) comprenant en outre une connexion de masse (14) et des connexions de signaux (16a, 16b), le connecteur de charge à courant alternatif ainsi que le connecteur de charge à courant continu pouvant être connectés à la connexion de masse (14) et aux connexions de signaux (16a, 16b) de la première portion de réception (10), l'agencement de capot (C) comprenant un premier élément de capot (30) agencé pour couvrir la première portion de réception (10) et un deuxième élément de capot (40) agencé pour couvrir la deuxième portion de réception (20), dans lequel le deuxième élément de capot (40) comprend un deuxième organe de couvercle (42) destiné à couvrir la deuxième portion de réception (20), dans lequel le premier élément de capot (30) est configuré pour pouvoir s'ouvrir séparément afin d'exposer la première portion de réception (10), et le deuxième élément de capot (40) pouvant s'ouvrir pour exposer la deuxième portion de réception (20), le premier élément de capot (30) étant configuré pour chevaucher partiellement le deuxième élément de capot (40) de telle sorte que les deux éléments de capot (30, 40) peuvent être ouverts au moyen du deuxième élément de capot (40) en exposant la première portion de réception (10) ainsi que la deuxième portion de réception (20), dans lequel le premier élément de capot (30) et le deuxième élément de capot (40) sont agencés pour être connectables au récepteur de charge combiné (R) de manière articulée à une distance l'un de l'autre **caractérisé en ce que** l'agencement de capot (C) est agencé de telle sorte que le deuxième élément de capot (40) est maintenu lorsqu'un connecteur de charge à courant alternatif est introduit dans la première portion de réception (10), dans lequel le deuxième organe de couvercle (42) du deuxième élément de capot (40) présente une forme telle que, lorsqu'un connecteur de charge à courant alternatif est introduit dans la première portion de réception (10) pour connexion, une portion du connecteur de charge à courant alternatif chevauche une portion du deuxième organe de couvercle (42).

2. Agencement de capot selon la revendication 1, dans lequel le premier élément de capot (30) comprend un premier organe de préhension (34) agencé pour faciliter l'ouverture manuelle du premier élément de capot (30) et le deuxième élément de capot (40) comprend un deuxième organe de préhension (44) agencé pour faciliter l'ouverture manuelle du deuxième élément de capot (40).

3. Véhicule (1) comprenant un agencement de capot selon l'une quelconque des revendications 1 et 2.
